# EUROPEAN PATENT APPLICATION

(11) **EP 4 576 325 A1**
(43) Date of publication of application: **25.06.2025**
(21) Application number: 23901005.1
(22) Date of filing: 30.11.2023
(51) Int. Cl.: H01M 10/54

(54) **METHOD OF REMOVING ONE-SIDED ELECTRODE LAYER FROM DOUBLE-COATED ELECTRODE**

(30) Priority: 05.12.2022 KR 20220167845
(71) Applicant: LG Energy Solution, Ltd., Seoul 07335 (KR)
(72) Inventor: LIM, Dongju, Daejeon 34122 (KR); YU, Hyein, Daejeon 34122 (KR); KIM, Wonjoong, Daejeon 34122 (KR)
(74) Representative: Plasseraud IP
(86) International application number: PCT/KR2023/019514
(87) International publication number: WO 2024/122986

(57) **Abstract**

The present disclosure provides a method for removing one-sided electrode layer from a double-sided electrode, the method comprising: interposing a double-sided electrode between an upper plate and a lower plate, wherein the upper plate has a structure in which an opening part communicating between upper and lower sides is formed, and the lower plate has a structure in which one side is opened and the other side is formed with a hermetically sealed depression part, and placing a plate assembly having a structure in which the upper plate and the lower plate are coupled to each other with the double-sided electrodes being interposed therebetween, in an NMP (N-methyl-2-pyrrolidone) water bath and applying ultrasonic waves.

## Description

### [TECHNICAL FIELD]

### Cross Citation with Related Application(s)

This application claims the benefit of Korean Patent Application No. 10-2022-0167845 filed on December 5, 2022 in the Korean Intellectual Property Office, the disclosure of which is incorporated herein by reference in its entirety.

The present disclosure relates to a method for removing a one-sided electrode layer from a double-sided electrode.

### [BACKGROUND]

Due to the rapid increase in the use of fossil fuels, the demand for the use of alternative energy or clean energy is increasing, and as part thereof, the fields that are being studied most actively are the fields of power generation and power storage using electrochemistry.

Currently, a secondary battery is a representative example of an electrochemical device that utilizes such electrochemical energy, and the range of use thereof tends to be gradually expanding.

Recently, with the increase of the technological development and demand for mobile devices such as portable computers, portable phones, and cameras, demand for secondary batteries as an energy source rapidly increases. Among such secondary batteries, many studies have been conducted on a lithium secondary battery that exhibits high charging/discharging characteristics, has a long cycle life, and is eco-friendly, and has been commercialized and widely used.

Meanwhile, before, during, and after use of such lithium secondary batteries, they are disassembled to remove the electrode layer from the electrode for various reasons, which are then recycled.

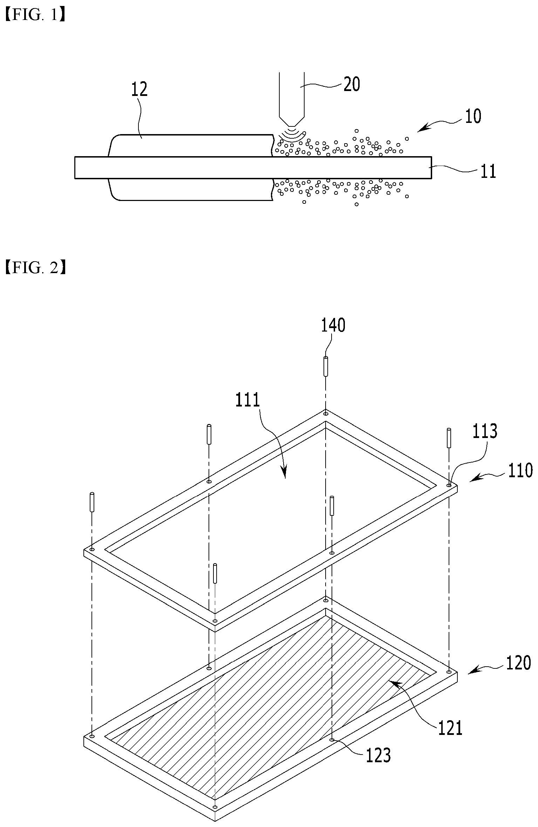

FIG. 1 schematically shows a conventional method of removing an electrode layer 12 from an electrode 10 as an example.

Referring to FIG. 1, conventionally, ultrasonic waves having little damage were used to peel only the electrode layer 12 from the electrode current collector 11. Specifically, a method of applying ultrasonic waves to the surface of the electrode layer 12 using a device that generates ultrasonic waves, such as an ultrasonic horn 20, to form small bubbles and then destroying the coating through this was used, and a solvent was not used.

In this regard, in the case of such a method, all of double-sided electrode layers 12 were destroyed, which made it difficult to use as a single-sided electrode.

However, for example, it is difficult to analyze the potential of the positive and negative electrodes in a typical full cell, and therefore, when an LTO electrode is inserted between the three-electrode cells to analyze the potential of the positive and negative electrodes, a single-sided positive electrode and a single-sided negative electrode were used one by one in the three-electrode cell in order to reduce resistance and reduce the risk of developing capacity.

Thus, the necessity for developing a method of removing a one-sided electrode layer from a double-sided electrode is emerging.

However, when removing the one-sided electrode layer from a double-sided electrode to produce a single-sided electrode, typically, an operator produces by hand using a solvent and a wafer towel. In this case, depending on the operator, problems such as foil damage and solvent penetration into the used electrode surface may occur.

Therefore, there is an urgent need to develop a technology that can solve these problems and recycle a double-sided electrode without damaging the surface used to produce a single-sided electrode.

### [DETAILED DESCRIPTION OF THE INVENTION]

### [Technical Problem]

It is an object of the present disclosure to provide a method of removing a one-sided electrode layer without damaging an electrode layer on the other side in a double-sided electrode while eliminating deviations caused by an operator.

### [Technical Solution]

In order to achieve the above object, according to one embodiment of the present disclosure, there is provided a method for removing one-sided electrode layer from a double-sided electrode, the method comprising:
interposing a double-sided electrode between an upper plate and a lower plate, wherein the upper plate has a structure in which an opening part communicating between upper and lower sides is formed, and the lower plate has a structure in which one side is opened and the other side is formed with a hermetically sealed depression part, and
placing a plate assembly having a structure in which the upper plate and the lower plate are coupled to each other with the double-sided electrodes being interposed therebetween, in an NMP (N-methyl-2-pyrrolidone) water bath and applying ultrasonic waves.

At this time, when the double-sided electrode is interposed between the upper plate and the lower plate, the area of the opening part and the depression part are smaller than the area of the double-sided electrode excluding the tabs of the double-sided electrode so as to cover both the opening part of the upper plate and the depression part of the lower plate, and specifically, may be 90% to 98% of the area of the double-sided electrode excluding the tabs of the double-sided electrode.

In one embodiment, an inner side surface where the upper plate faces the lower plate includes a groove having a shape corresponding to the frame shape of the upper plate, and a rubber ring may be mounted in the groove.

Herein, the rubber ring may press the entire edge of the double-sided electrode when the double-sided electrode is coupled.

In another embodiment, the upper plate and the lower plate can be mechanically coupled and disassembled, and specifically, the upper plate and the lower plate may be coupled by fastening bolts inserted into fastening holes.

Meanwhile, when the plate assembly is placed in an NMP (N-methylpyrrolidone) water bath, the NMP solvent may not exist between the double-sided electrode and the lower plate.

In one embodiment, the temperature of the NMP solvent in the NMP water bath may be between 25 degrees Celsius and 60 degrees Celsius, and two or more ultrasonic horns are formed in the NMP water bath.

In one embodiment, the plate assembly can apply ultrasonic waves in a state of being completely immersed in the NMP solvent. At this time, the ultrasonic waves may be applied at a frequency of 10 kHz to 500 kHz for 5 to 30 minutes.

Further, the method of removing the one-sided electrode layer may comprise drying the single-sided electrode from which the one-sided electrode layer has been removed after applying the ultrasonic waves.

### [BRIEF DESCRIPTION OF THE DRAWINGS]

FIG. 1 is a schematic diagram showing a conventional method of removing an electrode layer from a double-sided electrode as an example.
FIG. 2 is an exploded perspective view of a plate used in a method for removing a one-sided electrode layer according to an embodiment of the present disclosure.
FIG. 3 is a top view of a plate assembly according to an embodiment of the present disclosure.
FIG. 4 is a cross-sectional view of the plate assembly cut along line L in FIG. 3.
FIG. 5 is a schematic diagram of the inner side surface of the upper plate according to an embodiment of the present disclosure.
FIG. 6 is a schematic diagram of a method of removing a one-sided electrode layer according to an embodiment of the present disclosure.
FIG. 7 is a schematic diagram of the mechanism by which a one-sided electrode layer is removed from a double-sided electrode.

### [DETAILED DESCRIPTION OF THE EMBODIMENTS]

Hereinafter, specific embodiments will be described in more detail for a better understanding of the present disclosure.

Terms or words used in the specification and the appended claims should not be construed as limited to ordinary or dictionary meanings, and the present disclosure should be construed with meanings and concepts that are consistent with the technical idea of the present disclosure based on the principle that the inventors may appropriately define concepts of the terms to appropriately describe their own invention in the best way.

The terms used herein are provided to describe the embodiments but are not intended to limit the inventive concept. The singular forms include plural forms unless the context clearly indicates otherwise.

Further, throughout the description, when a portion is referred to as "including" or "comprising" a certain component, it means that the portion can further include other components, without excluding the other components, unless otherwise stated.

According to an embodiment of the present disclosure, there is provided a method for removing one-sided electrode layer from a double-sided electrode, the method comprising:
interposing a double-sided electrode between an upper plate and a lower plate, wherein the upper plate has a structure in which an opening part communicating between upper and lower sides is formed, and the lower plate has a structure in which one side is opened and the other side is formed with a hermetically sealed depression part, and
placing a plate assembly having a structure in which the upper plate and the lower plate are coupled to each other with the double-sided electrodes being interposed therebetween, in an NMP (N-methyl-2-pyrrolidone) water bath and applying ultrasonic waves.

Now, a method for removing a one-sided electrode layer according to an embodiment of the present disclosure will be described in more detail with reference to the accompanying drawings. However, the description of the drawings below is based on one embodiment, and the scope of the present disclosure is not limited thereby.

First, FIGS. 2 to 4 schematically show the plate assembly used in the present disclosure.

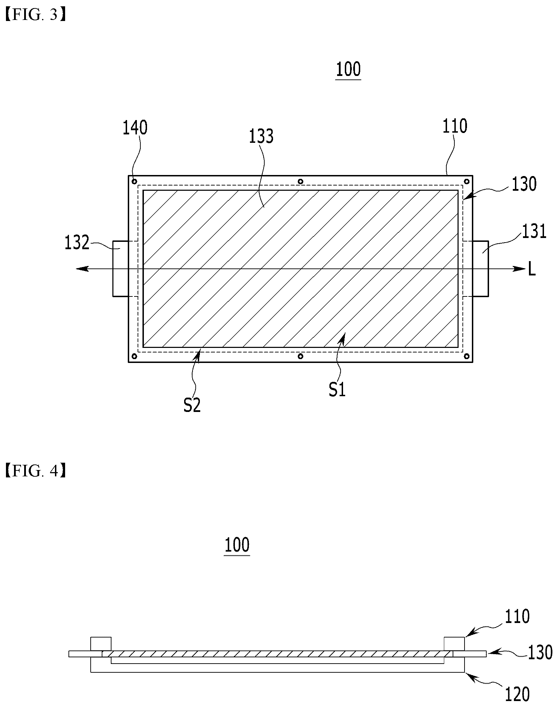

Specifically, FIG. 2 shows an exploded perspective view of a plate used in a method for removing a one-sided electrode layer according to an embodiment of the present disclosure, FIG. 3 shows a top view of a plate assembly in which a double-sided electrode is coupled with the plate, and FIG. 4 is a cross-sectional view of the plate assembly.

Referring to FIGS. 2 to 4, a plate assembly 100 has a structure in which a double-sided electrode 130 is interposed between an upper plate 110 and a lower plate 120.

Specifically, the upper plate 110 has a structure in which an opening part 111 communicating between upper and lower sides is formed, and the lower plate 120 has a structure in which one side is opened and the other side is formed with a hermetically sealed depression part. Here, the opening part 111 of the upper plate 110 and the depression part 121 of the lower plate 120 have the same area, and when they are coupled with the double-sided electrode 130, the opening part 111 and the depression part 121 are coupled so that they are located at the same position.

Here, the upper plate 110 and the lower plate 120 can be mechanically coupled and disassembled, whereby the double-sided electrode 130 can be inserted between the upper plate 110 and the lower plate 120 and removed.

At this time, the method of mechanically coupling and disassembling is not limited as long as it can be performed repeatedly, but for example, the plates can be coupled by fastening bolts 140 inserted into fastening holes 113 and 123. In the case of such a structure, the plates 110 and 120 can be used repeatedly.

Specifically, the upper plate 110 and the lower plate 120 may include fastening holes 113 and 123. The fastening bolt 140 is inserted into the fastening holes 113 and 123 in a state where the double-sided electrode 130 is interposed between the opening part 111 and the depression part 121 so that the one-sided electrode layer 133 is exposed, whereby the double-sided electrode 130 can be interposed between them to produce the plate assembly 100.

Moreover, after removing the one-sided electrode layer 133, the fastening bolt 140 is again removed from the fastening holes 113 and 123, so that the upper plate 110 and the lower plate 120 can be separated, and a single-sided electrode from which the one-sided electrode layer 133 has been removed can be separated and removed from the plate assembly 100.

Here, the fastening holes 113 and 123 may be formed in a position communicating with each other so that they can be coupled at once by one fastening bolt 140.

On the other hand, the double-sided electrode 130 must be interposed and fixed between the upper plate 110 and the lower plate 120, and therefore, when the double-sided electrode 130 is interposed between the upper plate 110 and the lower plate 120, the area S₁ of the opening part 111 and the depression part 121 is smaller than the area S₂ of the double-sided electrode 130 excluding the tabs 131 and 132 so as to cover both the opening part 111 of the upper plate 110 and the depression part 121 of the lower plate 120.

Specifically, the area S₁ of the opening part 111 and the depression part 121 may be 90% to 98%, specifically 92% to 98%, more specifically 92% to 95%, of the area S₂ of the double-sided electrode 130 excluding the tabs 131 and 132.

If the size of the opening part 111 and the depression part 121 is too small outside the above range, the one-sided electrode layer 133 that is not removed is likely to occur, and if the size of the opening part 111 and the depression part 121 is too large, the double-sided electrode 130 may not be interposed and fixed between the upper plate 110 and the lower plate 120, which is not preferable.

Moreover, in order to ensure that the double-sided electrode 130 is more firmly fixed so that it does not move between the upper plate 110 and the lower plate 120, a groove is formed in the inner side surface of the upper plate 110 facing the lower plate 120 in a form corresponding to the frame shape of the upper plate 110, and a rubber ring may be mounted in the groove.

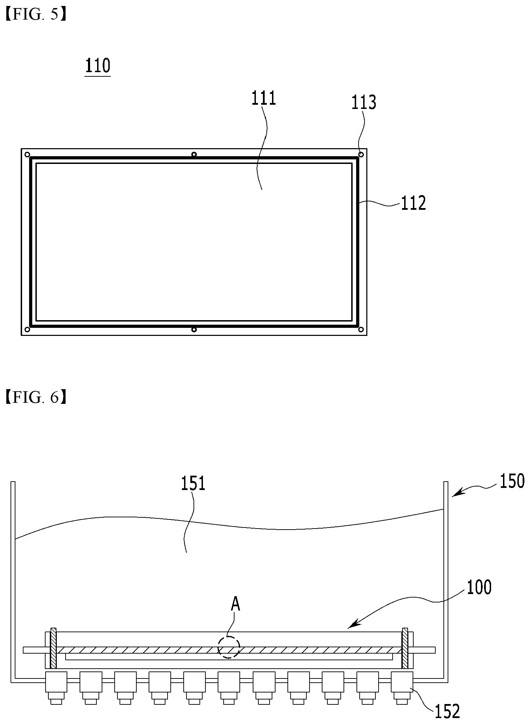

To explain this, the inner side surface of the upper plate 110 is schematically shown in FIG. 5.

Referring to FIG. 5, the upper plate 110 is formed so that the opening part 111 communicate between upper and lower sides, and has a frame shape. A rubber ring 112 is mounted on a groove (not shown) of a shape corresponding to this frame shape.

When the double-sided electrode 130 is then interposed between the rubber ring 112 and the lower plate 120, the rubber ring 112 can press the entire edge of the double-sided electrode 130. Therefore, the edges of the double-sided electrode 130 can be gripped more firmly, thereby preventing movement of the double-sided electrode 130, and subsequently preventing the NMP solvent from passing to the electrode layer on the other side. Thus, it is possible to effectively prevent damage to the electrode layer on the other side during the removal process of the one-sided electrode layer 133.

Therefore, a method of removing the one-sided electrode layer 133 using this plate assembly 100 will be described below.

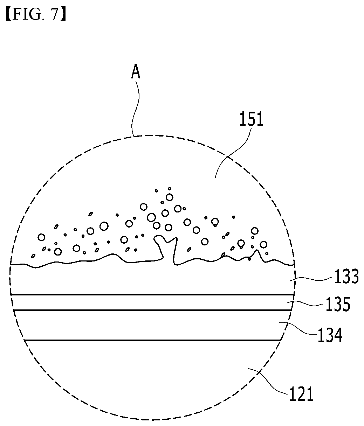

FIG. 6 shows a schematic diagram of a method of removing a one-sided electrode layer according to an embodiment of the present disclosure, and FIG. 7 shows a schematic diagram of the mechanism by which a one-sided electrode layer is removed.

Referring to FIGS. 6 and 7 in conjunction with FIGS. 3 and 4, the plate assembly 100 is configured such that the one-sided electrode layer 133 of the double-sided electrode 130 is exposed to the outside through the opening part 111 of the upper plate 110, and the other-sided electrode layer 134 is hermetically sealed by the lower plate 120.

The plate assembly 100 shown in FIG. 6 does not have a shape in which the one-sided electrode layer 133 is exposed as a side view rather than a cross-sectional view unlike FIG. 4, and when viewed from above, as shown in FIG. 3, it is inserted into the NMP water bath 150 with the one-sided electrode layer 133 being exposed.

Therefore, when the plate assembly 100 is inserted into the NMP water bath 150 and comes into contact with the NMP solvent 151, only the one-sided electrode layer 133 of the double-sided electrode 130 exposed through the opening part 111 of the upper plate 110 is in contact with the NMP solvent 151, and the other-sided electrode layer 134 on the other side facing the lower plate 120 is hermetically sealed by the lower plate 120 and does not contact the NMP solvent 151. That is, the NMP solvent 151 does not exist between the double-sided electrode 130 and the lower plate 120.

At this time, the temperature of NMP, and the NMP solvent 151 in the water bath 150 may be between 25 degrees Celsius and 60 degrees Celsius, specifically between 30 degrees Celsius and 60 degrees Celsius, and more specifically between 45 degrees Celsius and 50 degrees Celsius.

If the temperature is too high outside the above range, the temperature may be transferred to the other side of the double-sided electrode 130 and oxidation of the current collector may occur, which is not preferable.

Subsequently, the plate assembly 100 is placed in the NMP water bath 150, and the one-sided electrode layer 133 is removed by applying ultrasonic waves. At this time, since the one-side electrode layer 133 must completely contact the NMP solvent 151, ultrasonic waves can be applied to the plate assembly 100 in a state of being completely immersed in the NMP solvent 151.

Therefore, two or more ultrasonic horns 152 may be formed in the NMP water bath 150, and ultrasonic waves can be applied to the NMP solvent 151 by ultrasonic horns 152.

Here, ultrasonic waves can be applied at a frequency of 10 kHz to 500 kHz for 5 to 30 minutes. Specifically, ultrasonic waves may be applied at a frequency of 20 kHz to 50 kHz for 10 to 20 minutes.

If ultrasonic waves are applied for too short a time or at too low a frequency outside the above range, the one-sided electrode layer 133 may not be removed cleanly, and if ultrasonic waves are applied for too long a time or at too high a frequency, they may affect the surface of the current collector 135, which is not preferable.

When ultrasonic waves are applied in this way, a fine cavitation is formed in the NMP solvent 151 as shown in FIG. 7, similar to the ultrasonic cleaning principle. As this cavitation explodes and forms a gap between the one-sided electrode layers 133, and then the cavitation penetrates again into the gap and explodes, thereby removing the one-sided electrode layer 133.

At this time, only the one-sided electrode layer 133 formed on one side of the current collector 133 in the double-sided electrode 130 by the plate assembly 100 according to the present invention is in contact with the NMP solvent, and the NMP solvent cannot contact the other-sided electrode layer 134 formed on the other side, whereby only the one-sided electrode layer 133 on one side is removed, and the other-sided electrode layer 134 on the other side remains intact. Therefore, a single-sided electrode can be produced more easily.

Further, since the operator does not manually remove one-sided electrode layer 133, only the one-sided electrode layer 133 can be removed without any deviation depending on the operator.

Moreover, since the operation is performed using the NMP solvent 151 and ultrasonic waves, there is no damage to the surface of the current collector 135 of the one-sided electrode layer 133 to be removed, and the NMP solvent 151 has the effect of removing impurities, resulting in excellent quality, which is advantageous in obtaining a single-sided electrode.

Meanwhile, although not shown in the drawing, since the method of removing the one-sided electrode layer according to an embodiment of the present disclosure uses an NMP solvent, it may include a process of drying the single-sided electrode from which the one-sided electrode layer was removed after applying the ultrasonic waves.

From this, the NMP solvent is evaporated, and a reusable single-sided electrode can be ultimately obtained.

Although the exemplary embodiments of the present disclosure have been disclosed for illustrative purposes, those skilled in the art will appreciate that various modifications, additions and substitutions are possible, without departing from the scope and spirit of the invention as disclosed in the accompanying claims.

### [Industrial Applicability]

As explained above, according to the present disclosure, when producing a single-sided electrode from a double-sided electrode, it is possible to eliminate the deviation caused by an operator that occurs when conventionally performing manual operation, and at the same time, remove the electrode layer on one side without damaging the electrode layer on the other side.

Therefore, since the single-sided electrode produced in this way has almost no damage on its the surface during use, when the single-sided electrode produced subsequently is used, it is possible to achieve the effect of accurately developing capacity and reducing deviation.

## Claims

1. A method for removing one-sided electrode layer from a double-sided electrode, the method comprising:
interposing a double-sided electrode between an upper plate and a lower plate, wherein the upper plate has a structure in which an opening part communicating between upper and lower sides is formed, and the lower plate has a structure in which one side is opened and the other side is formed with a hermetically sealed depression part, and
placing a plate assembly having a structure in which the upper plate and the lower plate are coupled to each other with the double-sided electrodes being interposed therebetween, in an NMP (N-methyl-2-pyrrolidone) water bath and applying ultrasonic waves.

2. The method for removing one-sided electrode layer according to claim 1, wherein:
when the double-sided electrode is interposed between the upper plate and the lower plate, the area of the opening part and the depression part are smaller than the area of the double-sided electrode excluding the tabs so as to cover both the opening part of the upper plate and the depression part of the lower plate.

3. The method for removing one-sided electrode layer according to claim 2, wherein:
the area of the opening part and the depression part is 90% to 98% of the area of the double-sided electrode excluding the tabs.

4. The method for removing one-sided electrode layer according to claim 1, wherein:
an inner side surface where the upper plate faces the lower plate includes a groove having a shape corresponding to the frame shape of the upper plate, and a rubber ring is mounted in the groove.

5. The method for removing one-sided electrode layer according to claim 4, wherein:
the rubber ring presses the entire edge of the double-sided electrode when the double-sided electrode is coupled.

6. The method for removing one-sided electrode layer according to claim 1, wherein:
the upper plate and the lower plate can be mechanically coupled and disassembled.

7. The method for removing one-sided electrode layer according to claim 6, wherein:
the upper plate and the lower plate are coupled by fastening bolts inserted into fastening holes.

8. The method for removing one-sided electrode layer according to claim 1, wherein:
when the plate assembly is placed in an NMP (N-methylpyrrolidone) water bath, the NMP solvent does not exist between the double-sided electrode and the lower plate.

9. The method for removing one-sided electrode layer according to claim 1, wherein:
the temperature of the NMP solvent in the NMP water bath is between 25 degrees Celsius and 60 degrees Celsius.

10. The method for removing one-sided electrode layer according to claim 1, wherein:
two or more ultrasonic horns are formed in the NMP water bath.

11. The method for removing one-sided electrode layer according to claim 1, wherein:
the plate assembly can apply ultrasonic waves in a state of being completely immersed in the NMP solvent.

12. The method for removing one-sided electrode layer according to claim 1, wherein:
the ultrasonic waves are applied for 5 to 30 minutes.

13. The method for removing one-sided electrode layer according to claim 1, wherein:
the ultrasonic waves are applied at a frequency of 10 kHz to 500 kHz.

14. The method for removing one-sided electrode layer according to claim 1, wherein:
the method of removing the one-sided electrode layer comprises drying the single-sided electrode from which the one-sided electrode layer has been removed after applying the ultrasonic waves.
